(19) **Europäisches Patentamt**

**European Patent Office**

**Office européen des brevets**

(11) **EP 0 809 368 B1**

(12) **FASCICULE DE BREVET EUROPEEN**

(45) Date de publication et mention
de la délivrance du brevet:
**27.09.2000 Bulletin 2000/39**

(51) Int Cl.[7]: **H04B 10/135**, H04B 10/17

(21) Numéro de dépôt: **97401083.7**

(22) Date de dépôt: **15.05.1997**

(54) **Système de communication optique à amplificateurs optiques dont le gain dépend de la polarisation du signal d'entrée**

Optisches Übertragungssystem mit optischen Verstärkern und Verstärkung abhängig von der Eingangssignalpolarisation

Optical amplifier optical communication system with gain dependent on the input signal polarization

(84) Etats contractants désignés:
**DE GB IT**

(30) Priorité: **23.05.1996 FR 9606404**

(43) Date de publication de la demande:
**26.11.1997 Bulletin 1997/48**

(73) Titulaire: **ALCATEL**
**75382 Paris Cédex 08 (FR)**

(72) Inventeurs:
• **Gautheron, Olivier**
  **78180 Montigny Le Bretonneux (FR)**
• **Letellier, Vincent**
  **75013 Paris (FR)**

(74) Mandataire: **Sciaux, Edmond et al**
**COMPAGNIE FINANCIERE ALCATEL**
**Département Propriété Industrielle**
**30, avenue Kléber**
**75116 Paris (FR)**

(56) Documents cités:
**EP-A- 0 668 672**      **FR-A- 2 716 591**

• JOURNAL OF LIGHTWAVE TECHNOLOGY, vol. 12, no. 2, Février 1994, pages 288-293, XP000469791 SANTORO M A ET AL: "POLARIZATION SCRAMBLING USING A SHORT PIECE OF HIGH-BIREFRINGENCE OPTICAL FIBER AND A MULTIFREQUENCY LASER DIODE"
• OPTICAL FIBER COMMUNICATION. SUMMARIES OF PAPERS PRESENTED AT THE CONFERENCE OFC '95, SAN DIEGO, FEB. 26 - MAR. 3, 1995, vol. 8, 26 Février 1995, INSTITUTE OF ELECTRICAL AND ELECTRONICS ENGINEERS, pages 11-13, XP000517629 HEISMANN F: "FAST POLARIZATION CONTROLLERS AND SCRAMBLERS FOR HIGH-SPEED LIGHTWAVE SYSTEMS"
• PATENT ABSTRACTS OF JAPAN vol. 016, no. 580 (P-1461), 18 Décembre 1992 & JP 04 229842 A (FUJITSU LTD), 19 Août 1992,

## Description

L'invention est relative à un système de télécommunication optique.

Un tel système comprend des conducteurs optiques transmettant des signaux optiques émis par une ou plusieurs sources lasers dont l'amplitude est modulée par le signal à transmettre. Ce signal est le plus souvent un signal téléphonique ou un signal de données. L'avantage de la transmission optique est une faible déformation des signaux et une faible atténuation. Toutefois, l'atténuation n'est pas nulle ; elle se fait toujours sentir sur de longues distances. C'est pourquoi dans les systèmes de télécommunication optique, on prévoit, de place en place, des répéteurs destinés à amplifier le signal optique naturellement atténué.

Ces répéteurs comprennent des amplificateurs optiques. Un amplificateur optique est formé, en général, par une fibre optique dopée, par exemple par des ions erbium $Er^{+++}$, et par un laser de pompage destiné à réaliser l'inversion de population des électrons dans la fibre, cette inversion permettant l'effet d'amplification.

Si le signal optique d'entrée est polarisé, il peut être amplifié de façon anisotropique par l'amplificateur car le gain est plus faible dans la direction de polarisation du signal que dans la direction orthogonale. Autrement dit, l'amplificateur se sature plus fortement dans la direction de polarisation du signal que dans la direction orthogonale.

Ce gain différentiel détériore le rapport signal à bruit, ce qui affecte la qualité de la transmission.

Cette propriété des amplificateurs optiques est un inconvénient qu'on trouve dans tous les systèmes de télécommunication optique puisque, dans ces derniers, le signal optique est produit par un laser fournissant une onde polarisée.

Pour remédier à cet inconvénient, on a déjà proposé plusieurs solutions.

Par exemple, dans le brevet français n° 9401894 déposé le 18 février 1994 au nom de Alcatel CIT pour "Système de communication optique à brouilleur de polarisation" et publié sous le numéro 2717331, on prévoit un polariseur imposant une direction déterminée à la polarisation, et un modulateur de phase électro-optique recevant le signal polarisé à 45° par rapport aux axes propres du cristal du modulateur. La tension de commande appliquée au cristal modifie périodiquement son indice de réfraction. Cette variation d'indice, qui n'est pas la même pour les deux axes du cristal, est effectuée selon une période inférieure au temps de saturation de l'amplificateur. Elle produit un déphasage entre les composantes du vecteur de polarisation sur les deux axes du cristal. Ce déphasage entraîne la rotation du vecteur de polarisation et donc un "brouillage" de cette polarisation. Le gain de l'amplificateur est ainsi rendu isotrope.

Dans un autre exemple (brevet US 5361270), la polarisation est brouillée grâce à deux modulateurs de phase en série.

Le document FR 2 716 591 décrit un système où la polarisation est brouillée par un rotateur à effet Faraday alimenté par un courant d'excitation à variation sensiblement périodique.

L'invention vise à simplifier la réalisation du brouillage de polarisation.

Elle est caractérisée en ce que, pour brouiller la polarisation du signal optique, on prévoit un modulateur de phase ou de longueur d'onde qui fournit un signal modulé à un moyen à dispersion de polarisation, tel qu'une fibre optique, notamment du type à maintien de polarisation.

La modulation est choisie comme dans le brevet 9401894, c'est-à-dire avec une période inférieure au temps de saturation des amplificateurs optiques.

La dispersion de polarisation transforme la modulation de phase ou de longueur d'onde en modulation de polarisation et on obtient donc le brouillage de polarisation désiré.

Cette dispersion de polarisation existe naturellement dans pratiquement toutes les fibres optiques. Elle est due au fait qu'une fibre optique n'est, en pratique, ni jamais parfaitement cylindrique, ni jamais parfaitement homogène. Il en résulte une anisotropie, ou dispersion, de l'indice de réfraction qui provoque la modulation de polarisation d'une onde polarisée modulée en phase ou en longueur d'onde.

Si les fibres des lignes de communication utilisées dans le système à l'aval du modulateur de phase ou de longueur d'onde présentent une dispersion de polarisation, on constate que l'invention simplifie de manière importante la réalisation du brouilleur, soit par la suppression d'un polariseur (par rapport à la technique décrite dans le brevet français 9401894), soit par la suppression d'un modulateur (par rapport au brevet US 5361270). Dans ce cas, en pratique, le brouillage de polarisation nécessite uniquement l'utilisation d'une modulation de phase ou de longueur d'onde, la dispersion de polarisation étant obtenue de façon naturelle dans les fibres optiques de communication à l'aval du modulateur.

Si les fibres de communication présentent une dispersion de polarisation négligeable, on introduit, à l'aval du modulateur, au moins une portion de fibre ayant une dispersion suffisante pour obtenir le brouillage désiré.

Dans un exemple, une telle fibre est disposée de place en place, notamment dans chaque répéteur. L'installation d'une telle fibre apporte une contrainte négligeable pour la réalisation du système.

Dans un mode de réalisation, le modulateur de phase ou de longueur d'onde est à l'aval de l'émetteur laser.

Dans une variante, on ne prévoit pas de modulateur spécifique de phase ou longueur d'onde mais, à la place, on module la longueur d'onde du laser d'émission. Cette modulation sera aussi effectuée avec une période inférieure au temps de saturation des amplificateurs optiques.

D'autres caractéristiques et avantages de l'invention apparaîtront avec la description de certains de ses modes de réalisation, celle-ci étant effectuée en se référant aux dessins ci-annexés, sur lesquels :

> la figure 1 est un schéma d'un système de communication optique selon l'invention, et
> les figures 2 et 3 sont des diagrammes se rapportant au fonctionnement du système de la figure 1.

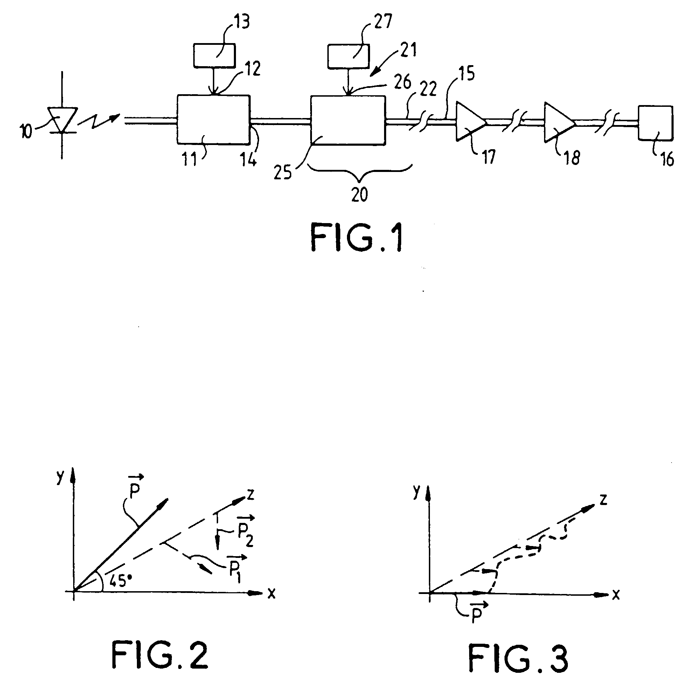

Le système de communication optique représenté sur la figure 1 comporte, de façon en soi connue, un émetteur laser 10 produisant une onde optique monochromatique polarisée qui est transmise à un modulateur d'amplitude 11, recevant sur une entrée 12, des signaux de commande fournis par un générateur 13 destiné à moduler l'amplitude du signal optique. Dans l'exemple, la modulation est numérique. Elle représente l'information à transmettre, par exemple des communications téléphoniques.

Les signaux à la sortie 14 du modulateur 11 sont destinés à être transmis à grande distance, le plus souvent des milliers de kilomètres, par des fibres optiques 15 vers une ou plusieurs installations ou centres de réception 16.

Sur la ligne 15, on prévoit, de place en place, des répéteurs 17, 18 ... constitués par des amplificateurs optiques destinés à amplifier le signal optique. Ces répéteurs sont, par exemple, à puissance constante.

Les amplificateurs optiques des répéteurs 17, 18 sont des amplificateurs à fibres dopées dont le gain dépend de la polarisation du signal d'entrée, comme on l'a vu plus haut.

Pour obtenir un gain isotrope des amplificateurs des répéteurs 17, 18, on prévoit un dispositif 20 de brouillage de polarisation qui dépolarise, au moins en grande partie, le signal optique fourni aux répéteurs 17, 18...

Le brouilleur 20 comporte, d'une part, un modulateur 21 de la phase de l'onde optique appliquée sur son entrée et, d'autre part, une fibre optique 22 présentant une dispersion de polarisation suffisante pour obtenir le brouillage désiré et recevant le signal modulé en phase fourni par le modulateur 21. Comme on le verra plus loin, la fibre optique 22 du type à maintien de polarisation n'est, en général, pas un élément rajouté mais est la fibre utilisée habituellement pour transmettre les signaux, ses propriétés de dispersion de polarisation participant au brouillage recherché.

Un modulateur de phase 21 est en soi connu. Il comprend, dans une réalisation, un cristal de niobate de lithium 25 entre deux faces duquel on applique une tension électrique variable avec une période au plus égale au temps de saturation des amplificateurs.

Cette tension, appliquée sur le cristal 25 est symbolisée par une entrée 26 sur la figure 1 et le générateur de tension est représenté par le bloc 27.

La tension appliquée au cristal 25 provoque une variation d'indice de réfraction n qui n'est pas la même sur les axes x et y du cristal. Cette variation d'indice de réfraction engendre, comme on le verra plus loin en relation avec la description des diagrammes des figures 2 et 3, une modulation de phase du signal optique.

Cette modulation de phase du signal optique se traduit par une modulation de la polarisation, c'est-à-dire par une rotation du vecteur de polarisation, si ce dernier n'a pas, à l'entrée du modulateur 20, une direction correspondant à l'un des axes x ou y du cristal. De plus, la modulation de polarisation dépend de l'angle du vecteur de polarisation par rapport aux axes x et y à l'entrée du modulateur 20 ; cette modulation est la plus importante quand ce vecteur est incliné à 45° par rapport aux axes x et y.

Ainsi, avec un simple modulateur de phase électro-optique, le brouillage de polarisation n'est pas toujours garanti et, de toute façon, n'est pas optimum si on ne prend pas de précautions. C'est pourquoi dans le brevet antérieur n° 9401894, on a prévu un polariseur en amont du modulateur de phase de façon que le signal optique à l'entrée de ce modulateur présente une polarisation inclinée, de préférence à 45°, par rapport aux axes du cristal du modulateur.

La présente invention prévoit une autre solution, plus simple. Elle consiste à prévoir un organe 22 de dispersion de polarisation qui transforme une modulation de phase appliquée sur son entrée en une modulation de polarisation. Dans la réalisation décrite, ce dispositif 22 est une simple fibre optique présentant une dispersion de polarisation.

La plupart des fibres optiques à maintien de polarisation utilisées dans les systèmes de télécommunication présentent une telle dispersion de polarisation. C'est pourquoi le dispositif 22 peut être constitué par la fibre utilisée habituellement pour la transmission des signaux optiques qui a ainsi, d'une part, sa fonction habituelle de transmission et, d'autre part, une fonction de dispersion de polarisation participant au brouillage.

Cependant, dans certains systèmes de communication on utilise des fibres optiques présentant une dispersion de polarisation faible. Dans ce cas, on prévoira, à l'aval du modulateur, au moins un morceau de fibre optique présentant la dispersion de polarisation nécessaire. Ce morceau est, par exemple disposé à la sortie du modulateur 21 et, de place en place, sur la ligne, par exemple dans chaque répéteur.

Dans une variante (non représentée) le modulateur 21 fait varier la longueur d'onde du signal optique. Dans une autre variante (non représentée), on ne prévoit pas de modulateur 21, mais, à la place, une modulation de la longueur d'onde du signal optique produit par l'émetteur laser 10.

La modulation de longueur d'onde est équivalente à une modulation de phase et est, comme cette dernière, transformée en modulation de polarisation par le dispositif 22.

Sur le diagramme de la figure 2, on a représenté les axes x et y du cristal 25 du modulateur 21 qui sont perpendiculaires à la direction z de propagation du signal optique. Dans l'exemple représenté sur la figure 2, le vecteur $\vec{P}$ de polarisation est, dans le plan x, y, incliné à 45° par rapport à ces deux axes.

La modulation d'indice de réfraction produite par la tension fournie par le générateur 27 n'est pas la même sur les axes x et y, ce qui se traduit par une modulation différentielle de phase sur ces axes x et y. Il en résulte que les composantes du vecteur $\vec{P}$ sur les axes x et y ne varient pas en synchronisme. Ainsi, le vecteur $\vec{P}$ subit une rotation le long de l'axe z, comme représenté par les vecteurs $\vec{P}_1$ et $\vec{P}_2$ sur la figure 2. C'est cette rotation qui constitue le brouillage de polarisation.

Toutefois, si, comme représenté sur la figure 3, le vecteur $\vec{P}$ se trouve sur l'un des axes du cristal (ou la direction d'un de ces axes), l'axe x sur cette figure, la modulation de phase ne se traduit pas par une rotation du vecteur $\vec{P}$, ce dernier restant toujours dans le plan des axes x et z. La fibre 22 à dispersion de polarisation transforme cette modulation de phase en une modulation de polarisation, c'est-à-dire en une rotation du vecteur de polarisation autour de l'axe z qui constitue le brouillage nécessaire de la polarisation pour réduire le bruit dans les amplificateurs optiques des répéteurs 17, 18...

Si le vecteur $\vec{P}$ de polarisation - sans avoir la direction d'un axe - ne présente pas l'inclinaison optimale, le brouillage de polarisation n'est pas maximum. L'augmentation du brouillage est obtenue grâce à la fibre 22 transformant la modulation de phase en modulation de polarisation.

Les conditions que doit satisfaire la modulation de phase ou de longueur d'onde pour obtenir le résultat souhaité sont :

1°) une variation suffisamment rapide pour que sa période soit inférieure au temps de saturation des amplificateurs. A cet effet, la fréquence de modulation est d'au moins 1 KHz ;

2°) une amplitude suffisamment importante pour créer la rotation de polarisation.

La modulation sera choisie en fonction de la relation suivante :

$$\theta = 2\pi\Delta f.\tau$$

Dans cette relation :

$\Delta f$ est l'écart de fréquence, exprimé en Hertz, entre deux longueurs d'ondes (c'est l'amplitude de la modulation) ;

$\tau$ est la dispersion de polarisation totale, exprimée en unité de temps ; et

$\theta$ est l'angle entre deux vecteurs représentant la polarisation de deux longueurs d'ondes, ces vecteurs étant définis sur la sphère dite de Poincaré.

Pour obtenir un angle $\theta$ égal à $\pi$ radians, correspondant à des vecteurs de polarisation orthogonaux, on peut choisir une dispersion de 15 picosecondes et un écart $\Delta f$ de 33 gigahertz.

## Revendications

1. Système de communication optique à longue distance, du type à brouillage de polarisation d'un signal optique monochromatique transmis, le brouilleur faisant tourner le vecteur ($\vec{P}$) de polarisation et comprenant un modulateur (21) de la phase du signal optique, caractérisé en ce que les fibres de communication optique sont à dispersion de polarisation et contribuent au brouillage en transformant la modulation de phase en une modulation de polarisation.

2. Système de communication optique à longue distance, du type à brouillage de polarisation d'un signal optique monochromatique transmis, le brouilleur faisant tourner la polarisation de l'onde optique à transmettre, caractérisé en ce que le brouilleur comprend, un modulateur (21) de la longueur d'onde du signal optique et en ce que les fibres de communication optique sont à dispersion de polarisation et contribuent au brouillage en transformant la modulation de longueur d'onde en une modulation de polarisation

3. Système selon la revendication 1 ou 2, caractérisé en ce qu'une fibre (22) à dispersion de polarisation est disposée de place en place sur la ligne, de préférence dans chaque répéteur (17, 18).

4. Système selon la revendication 2, caractérisé en ce que la modulation de longueur d'onde est réalisée par une modulation de la longueur d'onde de la source laser (10) monochromatique du système.

5. Système selon l'une quelconque des revendications précédentes, caractérisé en ce qu'il comprend des répéteurs (17, 18) à amplificateur optique de type à fibres dopées, notamment à l'erbium.

6. Système selon l'une quelconque des revendications précédentes, caractérisé en ce que le modulateur de phase ou de longueur d'onde (21) est du type électro-optique comportant un cristal (25), par exemple en niobate de lithium, auquel on applique une tension faisant varier son indice de réfraction.

**7.** Système selon l'une quelconque des revendications précédentes, caractérisé en ce qu'il comprend au moins un amplificateur optique et, en ce que la modulation de phase ou de longueur d'onde a une période au moins égale au temps de saturation de l'amplificateur optique.

**Patentansprüche**

**1.** System zur optischen Kommunikation über große Entfernungen vom Typ mit Störung der Polarisation eines übertragenen monochromatischen optischen Signals, wobei der Störer den Vektor (P) der Polarisation dreht und einen Modulator (21) der Phase des optischen Signals umfasst, dadurch gekennzeichnet, dass die optischen Kommunikationsfasern polarisationsdispergierend sind und zu der Störung beitragen, indem sie die Phasenmodulation in eine Polarisationsmodulation umwandeln.

**2.** System zur optischen Kommunikation über große Entfernungen vom Typ mit Störung der Polarisation eines übertragenen monochromatischen optischen Signals, wobei der Störer die Polarisation der zu übertragenden optischen Welle dreht, dadurch gekennzeichnet, dass der Störer einen Modulator (21) der Wellenlänge des optischen Signals umfasst und dass die optischen Kommunikationsfasern polarisationsdispergierend sind und zu der Störung beitragen, indem sie die Wellenlängenmodulation in eine Polarisationsmodulation umwandeln.

**3.** System nach Anspruch 1 oder 2, dadurch gekennzeichnet, dass eine polarisationsdispergierende Faser (22) stellenweise auf der Leitung, vorzugsweise in jedem Repeater (17, 18), angeordnet ist.

**4.** System nach Anspruch 2, dadurch gekennzeichnet, dass die Wellenlängenmodulation durch eine Modulation der Wellenlänge der monochromatischen Laser-Quelle (10) des Systems erzeugt wird.

**5.** System nach einem beliebigen der vorhergehenden Ansprüche, dadurch gekennzeichnet, dass es Repeater (17, 18) mit optischem Verstärker vom Typ mit dotierten Fasern, insbesondere mit Erbium-Dotierung, umfasst.

**6.** System nach einem beliebigen der vorhergehenden Ansprüche, dadurch gekennzeichnet, dass der Phasen- oder Wellenlängenmodulator (21) vom elektrooptischen Typ ist, mit einem Kristall (25), zum Beispiel aus Lithiumniobat, an den eine Spannung angelegt wird, die seinen Brechungsindex variiert.

**7.** System nach einem beliebigen der vorhergehenden Ansprüche, dadurch gekennzeichnet, dass es wenigstens einen optischen Verstärker umfasst und dass die Phasen- oder Wellenlängenmodulation eine Periode hat, die wenigstens gleich der Sättigungszeit des optischen Verstärkers ist.

**Claims**

**1.** Long distance optical communication system of the type using polarisation scrambling of a transmitted monochromatic optical signal, the scrambler causing the polarisation vector ($\vec{P}$) to rotate and including a phase modulator (21) for modulating the phase of the optical signal, characterised in that the optical communication fibres are of the polarisation dispersion type and contribute to scrambling by converting the phase modulation into polarisation modulation.

**2.** Long distance optical communication system of the type using polarisation scrambling of a transmitted monochromatic optical signal, the scrambler causing the polarisation [lacuna] of the optical wave to be transmitted to rotate, characterised in that the scrambler includes a wavelength modulator (21) for modulating the wavelength of the optical signal and in that the optical communication fibres are of the polarisation dispersion type and contribute to scrambling by converting the wavelength modulation into polarisation modulation.

**3.** System according to claim 1 or claim 2, characterised in that a polarisation dispersion fibre (22) is provided from place to place on the line, preferably in each repeater (17, 18).

**4.** System according to claim 2, characterised in that the wavelength modulation is effected by modulating the wavelength of the monochromatic laser source (10) of the system.

**5.** System according to any one of the preceding claims, characterised in that it includes repeaters (17, 18) including doped fibre type optical amplifiers, in particular erbium doped fibre type optical amplifiers.

**6.** System according to any one of the preceding claims, characterised in that the phase modulator or wavelength modulator (21) is of the electro-optical type including a crystal (25), for example a lithium niobate crystal, to which a voltage is applied to vary its refractive index.

**7.** System according to any one of the preceding claims, characterised in that it includes at least one optical amplifier and phase modulation or in that the wavelength modulation has a period at least equal to the saturation time of the optical amplifier.

FIG.1

FIG.2

FIG.3